# EUROPEAN PATENT SPECIFICATION

(11) **EP 4 088 839 B1**
(45) Date of publication and mention of the grant of the patent: **29.05.2024**
(21) Application number: 20911395.0
(22) Date of filing: 18.12.2020
(51) Int. Cl.: B23B 19/02, F16C 19/06, F16C 19/26, F16C 35/12, F16C 41/00, G01B 13/08, G01B 13/12, G01B 21/12, G01B 21/16, B23Q 17/00, F16C 17/24

(54) **CALCULATION METHOD, BEARING DEVICE, AND SPINDLE DEVICE FOR MACHINE TOOL**
BERECHNUNGSVERFAHREN, LAGERVORRICHTUNG UND SPINDELVORRICHTUNG FÜR EINE WERKZEUGMASCHINE
PROCÉDÉ DE CALCUL, DISPOSITIF DE PALIER, ET DISPOSITIF DE BROCHE POUR MACHINE-OUTIL

(30) Priority: 10.01.2020 JP 2020002835
(43) Date of publication of application: 16.11.2022
(73) Proprietor: NSK Ltd., Tokyo 141-8560 (JP)
(72) Inventor: KENMOCHI, Kenta, Fujisawa-shi, Kanagawa 251-8501 (JP)
(74) Representative: Grünecker Patent- und Rechtsanwälte PartG mbB
(86) International application number: PCT/JP2020/047578
(87) International publication number: WO 2021/140887

(56) References cited:
- EP-A1- 3 786 602
- DE-A1- 19 919 007
- JP-A- H03 504 416
- JP-A- S56 168 108
- JP-A- 2000 110 836
- JP-A- 2001 349 718
- JP-A- 2001 349 718
- JP-A- 2008 082 425
- JP-A- 2011 240 415
- JP-A- 2019 120 658

## Description

### TECHNICAL FIELD

The present invention relates to a calculation method, a bearing device, and a spindle device of a machine tool.

### BACKGROUND ART

In recent years, there has been an increasing movement to control a cutting load on a main shaft (spindle) of a machine tool, leading to higher processing speed, higher accuracy, and longer bearing life, and as one of measures, there is an increasing need for measuring an amount of a load applied to a shaft during operation. In addition, the need for technology to detect abnormalities in bearings in use in advance is also increasing, and along with the extension of bearing life, there is an increasing movement to operate a processing line itself without stopping as much as possible.

In addition, it is very difficult to directly measure the amount of a load applied to a shaft during processing, as an alternative method, a method of measuring an axial displacement using a non-contact displacement sensor such as an eddy current displacement sensor and converting the axial displacement into a cutting load is adopted. In order to convert the axial displacement to the cutting load, a rigidity value of a spindle of a machine tool is required, and the rigidity of the bearing used has a great influence on the rigidity value.

A bearing has a characteristic that the rigidity of the bearing changes significantly due to effects of centrifugal deformation due to rotation, thermal deformation due to friction and heat generation from a motor, and specifically, a difference in thermal expansion due to a temperature difference between an inner ring and an outer ring of the bearing. Therefore, in order to convert the axial displacement to the cutting load, it is necessary to consider not only the axial displacement but also change in the rigidity of the spindle of the machine tool due to the change in the rigidity of the bearing.

An amount of change in a difference in thermal expansion of the bearing can also be used to detect abnormalities in the bearing. Rolling friction increases as the bearing deteriorates, and heat generated by the bearing increases. At the same time, the difference in thermal expansion also changes, so a state of the bearing can be inferred by monitoring the change. Therefore, it is possible to prolong the life of the bearing by preventing serious problems such as failure of the main shaft and adjusting operating conditions so as to maintain the state of the bearing based on the monitoring result.

In addition, in a related art, as a method of measuring axial displacement with a vector, a method of measuring at two orthogonal points is common, but this method is based on the premise that a diameter of a measurement target is constant. Therefore, it is not possible to deal with a case where the diameter changes at the same time as the axial displacement changes.

In this situation, Patent Literature 1 relates to a method of calculating center deviation of a rotating body, and Patent Literature 1 discloses that a calculation circle is calculated from measurement data of three points along an outer surface in a circumferential direction while rotating the rotating body, and the center deviation of the rotating body is calculated based on the calculated calculation circle. According to the method of Patent Literature 1, by setting three measurement points, one circle can be determined on a measurement plane, so that it is possible to calculate an axial displacement vector and an amount of change in a diameter.

### CITATION LIST

### PATENT LITERATURE

Patent Literature 1: JP-B-4243639
Patent Literature 2: JP 2011 240415 A

### SUMMARY OF INVENTION

### TECHNICAL PROBLEM

An object of the present invention is to provide a calculation method, a bearing device, and a spindle device of a machine tool capable of measuring an amount of radial displacement of a rotation axis and an amount of change in a diameter of a rotating member by using measurement data of three or more positions on a plane orthogonal to the rotation axis of the rotating member.

### SOLUTION TO PROBLEM

In order to achieve the object described above, a calculation method according to an aspect of the present invention used for a bearing device including a rotating member, a bearing which supports the rotating member so that the rotating member can rotate, a housing which holds the bearing, and sensors which are installed in the housing or a non-rotating part of the bearing to measure a distance to a surface that rotates with the rotating member, includes calculating an amount of change in a diameter of the rotating member based on measurement results by the sensors provided at three or more positions on a plane orthogonal to a rotation axis of the rotating member.

A calculation method according to another aspect of the present invention includes the steps of supplying compressed gas to a measurement target gap between a rotating member and a housing from at least three directions around a bearing in a bearing device which supports the rotating member to the housing via the bearing so that the rotating member can rotate, detecting pressure change of the compressed gas, and calculating an amount of change in a diameter of the rotating member based on the detected pressure change.

A bearing device according to still another aspect of the present invention includes a rotating member, a bearing which supports the rotating member so that the rotating member can rotate, a housing which holds the bearing, and sensors which are installed in the housing or a non-rotating part of the bearing to measure a distance to a surface that rotates with the rotating member, where the sensors are provided at three or more positions on a circumference of a circle defined on a plane orthogonal to a rotation axis of the rotating member.

A spindle device of a machine tool according to still another aspect of the present invention is a spindle device of a machine tool including a rotating member, a bearing which supports the rotating member so that the rotating member can rotate, a housing which holds the bearing, and sensors which are installed in the housing or a non-rotating part of the bearing to measure a distance to a surface that rotates with the rotating member, where the sensors are provided at three or more positions on a plane orthogonal to a rotation axis of the rotating member, and the spindle device further includes a calculation unit which calculates an amount of change in a diameter of the rotating member based on measurement results by the sensors.

A spindle device of a machine tool according to still another aspect of the present invention is a spindle device of a machine tool which supports a rotating member to a housing via a bearing so that the rotating member can rotate, and includes a compressed gas supply unit which supplies compressed gas to a measurement target gap between the rotating member and the housing from at least three directions around the bearing, a detection unit which detects pressure change of the compressed gas, and a calculation unit which calculates an amount of change in a diameter of the rotating member based on the detected pressure change.

### ADVANTAGEOUS EFFECTS OF INVENTION

According to the aspect of the calculation method according to the present invention, by using the measurement data of the three or more positions on the plane orthogonal to the rotation axis of the rotating member, the amount of the radial displacement of the rotation axis and the amount of change in the diameter of the rotating member can be measured.

Further, in the bearing device according to the present invention, by using the measurement data of the three or more positions on the plane orthogonal to the rotation axis of the rotating member, the amount of the radial displacement of the rotation axis and the amount of change in the diameter of the rotating member can be measured.

Further, in the spindle device of the machine tool according to the present invention, by using the measurement data of the three or more positions on the plane orthogonal to the rotation axis of the rotating member, the amount of the radial displacement of the rotation axis and the amount of change in the diameter of the rotating member can be measured.

### BRIEF DESCRIPTION OF DRAWINGS

Fig. 1 is a view illustrating a configuration of a spindle device of a machine tool according to the present invention in a first embodiment.
Figs. 2A and 2B are schematic views illustrating a configuration of a bearing device according to the present invention in the first embodiment.
Fig. 3 is a cross-sectional view illustrating a bearing device according to the present invention in a second embodiment.
Fig. 4 is a cross-sectional view illustrating a bearing device according to the present invention in a third embodiment.
Fig. 5 is a cross-sectional view illustrating a bearing device according to the present invention in a fourth embodiment.
Fig. 6 is a cross-sectional view illustrating a bearing device according to the present invention in a fifth embodiment.
Fig. 7 is a cross-sectional view illustrating a bearing device according to the present invention in a sixth embodiment.
Fig. 8 is a cross-sectional view illustrating a bearing device according to the present invention in a seventh embodiment.
Fig. 9 is a cross-sectional view illustrating a bearing device according to the present invention in an eighth embodiment.
Fig. 10 is a view illustrating a configuration of a spindle device of a machine tool according to the present invention in a ninth embodiment.

### DESCRIPTION OF EMBODIMENTS

Hereinafter, embodiments of the present invention will be described with reference to the accompanying drawings. In the figure, the same or similar parts are designated by the same or similar reference numerals and letters. However, the drawings are schematic, and the relationship between the thickness and the plane dimensions, the ratio of the thickness of each layer, and the like are different from the actual ones. Therefore, the specific thickness and dimensions should be determined in consideration of the following explanation. In addition, it goes without saying that parts having different dimensional relationships and ratios are included between the drawings.

Further, the embodiments shown below exemplify devices and methods for embodying the technical idea of the present invention, and the technical idea of the present invention does not specify the material, shape, structure, arrangement, and the like of the component parts to the following. The invention is limited by the appended claims.

### (First Embodiment)

### <Configuration of Spindle Device of Machine Tool>

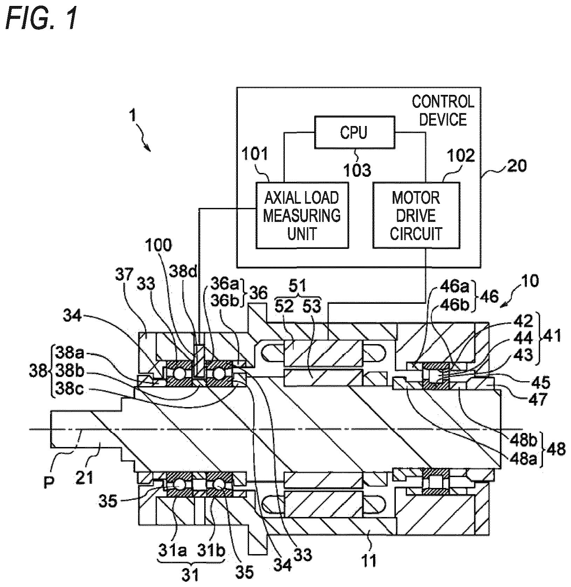

First, a configuration of a spindle device of a machine tool according to the present invention in a first embodiment will be described with reference to Fig. 1.

A spindle device 1 of a machine tool includes a bearing device 10 and a control device 20.

The bearing device 10 is a motor built-in type, and can measure a load applied to a shaft by detecting an amount of radial displacement of a rotation axis of a rotating member supported by a rolling bearing and an amount of change in a diameter of the rotating member. The details of the configuration of the bearing device 10 will be described below.

The control device 20 calculates an amount of a load applied to a shaft based on a measurement result measured by the bearing device 10. The control device 20 includes a load measuring unit 101, a motor drive circuit 102, and a CPU 103.

### <Configuration of Bearing Device>

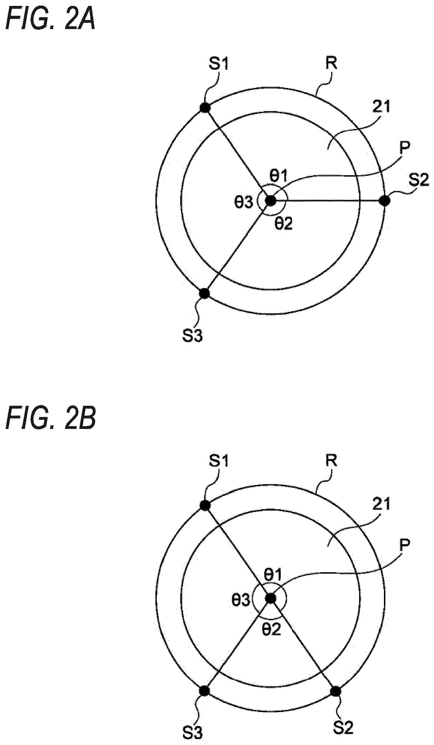

Next, the configuration of the bearing device 10 will be described with reference to Figs. 1 to 2B. In Fig. 1, a left direction will be described as a front direction and a right direction will be described as a rear direction. In Figs. 2A and 2B, Fig. 2A illustrates a case where displacement sensors 100 are provided at three positions excluding positions facing each other, and Fig. 2B illustrates a case where the displacement sensors 100 are provided at three positions, which are positions facing each other and a position other than the positions facing each other.

Generally, a spacer is provided in the vicinity of the bearing of the bearing device 10 for the purpose of adjusting a preload or installing a lubrication mechanism. Further, the bearings used in the general bearing device 10 are roughly classified into fixed side bearings and free side bearings, each of which is composed of a single row or a double row. Here, the fixed side and the free side mean fixed and free in an axial direction.

In particular, the bearing device 10 includes a housing 11, a rotating member 21, a front rolling bearing 31, a front outer ring side spacer 36, a front inner ring side spacer 38, a nut 39, a rear rolling bearing 41, a rear outer ring side spacer 46, a nut 47, a rear inner ring side spacer 48, a drive motor 51, and the displacement sensor 100.

In the bearing device 10, the rotating member 21 (spindle of a machine tool) having a hollow shape is rotatably supported by the front rolling bearing 31 and the rear rolling bearing 41 with respect to the housing 11 which is a fixing member. The rotating member 21 is rotationally driven by the drive motor 51 arranged between the front rolling bearing 31 and the rear rolling bearing 41.

The front rolling bearing 31 as a front bearing is provided between the housing 11 and the rotating member 21 in the vicinity of one end (front end) in the axial direction of a rotation axis P of the rotating member 21. The front rolling bearing 31 is composed of a pair of an angular ball bearing 31a as a first front bearing and an angular ball bearing 31b as a second front bearing which have substantially the same dimensions and are arranged so as to form a back surface combination. Each of the angular ball bearings 31a and 31b includes an outer ring 33 which is a stationary raceway ring, an inner ring 34 which is a rotatory raceway ring, and a plurality of balls 35 as rolling elements arranged with a contact angle between an outer ring raceway groove which is a stationary raceway and an inner ring raceway groove which is a rotatory raceway. That is, each of the bearings 31a and 31b has the inner ring 34, the outer ring 33, and the ball 35 rotatably arranged between the inner ring 34 and the outer ring 33.

Each of the angular ball bearings 31a and 31b has the outer ring 33 fitted in the housing 11 via the outer ring side spacer 36, and is fixed by a front bearing outer ring retainer 37 bolted to the housing 11.

Further, the inner ring 34 of each of the angular ball bearings 31a and 31b is externally fitted to the rotating member 21 via an inner ring side spacer 38, and is fixed to the rotating member 21 by the nut 39 fastened to the rotating member 21. The angular ball bearings 31a and 31b are loaded with a fixed position preload by the nut 39. Therefore, the position of the rotating member 21 in a rotation-axis P direction is positioned by the front rolling bearing 31.

The front outer ring side spacer 36 has an intermediate spacer 36a arranged between the pair of the angular ball bearing 31a and the angular ball bearing 31b, and a rear end spacer 36b located further on a rear side than the front rolling bearing 31.

The front inner ring side spacer 38 is fitted to the rotating member 21. The front inner ring side spacer 38 includes a front end spacer 38a located further on a front side than the front rolling bearing 31, an intermediate spacer 38b arranged between the pair of the angular ball bearing 31a and the angular ball bearing 31b, and a rear end spacer 38c located further on the rear side than the front rolling bearing 31. A radial outer surface (outer peripheral surface) 38d of the intermediate spacer 38b faces the displacement sensor 100. In the following description, the radial outer surface 38d of the intermediate spacer 38b is referred to as a facing surface. The facing surface 38d is a measurement surface for measuring a distance between the displacement sensor 100 and the intermediate spacer 38b by the displacement sensor 100. The facing surface 38d is arranged further on the rear side than the angular ball bearing 31a, which is a frontmost bearing. The position of the facing surface 38d changes due to the radial displacement of the rotation axis P of the rotating member 21 or the change in the diameter of the rotating member 21.

The rear rolling bearing 41 as a rear bearing is a cylindrical roller bearing. The rear rolling bearing 41 is provided between the housing 11 and the rotating member 21 in the vicinity of the other end (rear end) in the axial direction of the rotation axis P of the rotating member 21. The rear rolling bearing 41 includes an outer ring 42, an inner ring 43, and a plurality of cylindrical rollers 44 as rolling elements. The outer ring 42 of the rear rolling bearing 41 is fitted in the housing 11 and is fixed in the housing 11 via the outer ring side spacer 46 by a rear bearing retainer 45 bolted to the housing 11. The inner ring 43 of the rear rolling bearing 41 is fixed to the rotating member 21 via the inner ring side spacer 48 by the nut 47 fastened to the rotating member 21.

The rear outer ring side spacer 46 includes a front end spacer 46a located further on the front side than the bearing 41 and a rear end spacer 46b located further on the rear side than the rear rolling bearing 41.

The rear inner ring side spacer 48 is fitted to the rotating member 21. The rear inner ring side spacer 48 includes a front end spacer 48a located further on the front side than the rear rolling bearing 41 and a rear end spacer 48b located further on the rear side than the rear rolling bearing 41.

The drive motor 51 is composed of a stator 52 fitted in the housing 11 and a rotor 53 externally fitted to the rotating member 21 and facing an inner peripheral side of the stator 52 via a gap.

The displacement sensor 100 is held in the housing 11. The displacement sensors 100 are provided at three or more positions on the circumference of a circle R (see Fig. 2A) defined on a plane orthogonal to the rotation axis P of the rotating member 21, excluding the positions facing each other. That is, in the present embodiment, three displacement sensors 100 are provided. Fig. 2A illustrates a case where the displacement sensors 100 are provided at three positions S1, S2, and S3 on the circumference of the circle R. In Fig. 2A, the angle between the positions S1 and S2 is set to θ1, the angle between the positions S2 and S3 is set to θ2, and the angle between the positions S3 and S1 is set to θ3. As illustrated in Fig. 2A, the positions S1, S2, and S3 are arranged so that the positions S1, S2, and S3 do not face each other on the circumference of the circle R, for example, each of θ1, θ2, and θ3 is 120 degrees. When θ1 is 180 degrees, S1 and S2 are in positions facing each other.

The displacement sensor 100 is provided so as to face the facing surface 38d in a direction orthogonal to the rotation axis P of the rotating member 21. The displacement sensor 100 measures a distance from the facing surface 38d, and outputs an electric signal corresponding to the measured distance to the load measuring unit 101 of the control device 20. The displacement sensor 100 is installed on a non-rotating body side of the bearing device 10, and the measurement surface of the displacement sensor 100 faces a rotating body side of the bearing device 10.

The displacement sensor 100 is a non-contact displacement sensor such as an eddy current displacement sensor, a capacitance displacement sensor, a laser displacement meter, or an air gap sensor.

### <Configuration of Control Device>

Next, the configuration of the control device 20 connected to the bearing device 10 will be described with reference to Fig. 1. The connection between the bearing device 10 and the control device 20 may be a wired connection or a wireless connection.

As described above, the control device 20 includes the load measuring unit 101, a motor drive circuit 102, and the CPU 103.

The load measuring unit 101 operates under the control of the CPU 103. The load measuring unit 101 receives the detection values of the three displacement sensors 100. More specifically, the load measuring unit 101 receives an electric signal according to the distance to each of the three measurement surfaces input from the three displacement sensors 100. Then, the load measuring unit 101 measures the radial displacement (center deviation) of the rotation axis P of the rotating member 21 and the amount of change in the diameter of the rotating member 21 based on the electric signals. The load measuring unit 101 calculates the load applied to a shaft based on the measured radial displacement (center deviation) of the rotation axis P and the measurement results of the amount of change in the diameter of the rotating member 21, and outputs the calculation result of the load applied to a shaft to the CPU 103. Here, the radial displacement (center deviation) of the rotation axis P is a deviation in the direction orthogonal to the rotation axis P from a reference position of the rotation axis P of the rotating member 21. Further, the change in the diameter of the rotating member 21 is a change in the diameter with respect to the reference diameter of the rotating member 21.

The motor drive circuit 102 drives the drive motor 51 under the control of the CPU 103.

The CPU 103 reads a control program stored in advance in a memory (not illustrated) and executes the read control program to control the entire operation of the control device 20. The CPU 103 performs predetermined control based on the calculation result of the load applied to a shaft input from the load measuring unit 101. Here, the predetermined control is control for the motor drive circuit 102 to reduce the driving force of the drive motor 51, or control for notifying by, for example, displaying an abnormality when the load amount of the load applied to a shaft indicated by the measurement result is equal to or more than a threshold value. The control device 20 may have a display unit for displaying that the load applied to a shaft is abnormal. Alternatively, the control device 20 may output a signal to an external display device, and the display device may display information or an image regarding an abnormal load applied to a shaft.

The control device 20 is not limited to calculating the load amount of the load applied to a shaft, but may be limited to calculating the radial displacement (center deviation) of the rotation axis P and the amount of change in the diameter of the rotating member 21. In this case, for example, the radial displacement (center deviation) of the rotation axis P and the amount of change in the diameter of the rotating member 21 may be displayed on the display device to perform notification.

### <Operation of Spindle Device of Machine Tool>

Next, the operation of the spindle device 1 of the machine tool will be described.

In a state where the rotating member 21 of the bearing device 10 is rotated, the control device 20 calculates a measurement circle from the measured values on the facing surfaces 38d at three positions by using an approximation method such as the circumscribed circle center method, the inscribed circle center method, the minimum region center method, or the least squares center method with respect to the amount of displacement in the radial direction from a reference circle with any state as the reference circle. In this case, it is preferable to perform a plurality of measurements in order to improve the measurement accuracy.

Further, since the bearing device 10 is a machine that requires high-speed rotation and high rotation accuracy, components of the bearing device 10 are also manufactured with high accuracy. Further, the measured displacement amount is very small, about 1 / 1,000 to 1 / 10,000, with respect to the diameter of the measurement circle. From this, since sufficient measurement accuracy can be expected even with only one measurement, the difference between the reference circle and the measurement circle may be obtained instead of the approximation method described above. Specifically, the output value of each displacement sensor 100 is used as a reference value or offset by zero, and then the difference amount of the output value of each displacement sensor 100 from any time point to another time point is measured. Then, the average value of the difference amounts on the respective facing surfaces 38d, which are the measurement surfaces of the respective displacement sensors 100, is set as the amount of change in the diameter between the diameter (the diameter of the circle R illustrated in Figs. 2A and 2B) of the facing surface 38d from the rotation axis P and the diameter of the predetermined reference circle. Further, a displacement vector displacement amount of the rotation axis P is calculated from the difference (two values) between the respective difference amounts in the displacement sensors 100 at two positions out of the displacement sensors 100 at three positions and the average value of the difference amounts. In this case, since the displacement vector displacement amount of the rotation axis P can be calculated for the number of combinations of the displacement sensors 100 at two positions, by using the average value of these displacement vector displacement amounts, a highly accurate displacement vector displacement amount can be obtained. The closer each angle (in the case of Figs. 2A and 2B, θ1, θ2, and θ3) between the adjacent displacement sensors 100 on the circumference of the circle R with respect to the rotation axis P is to the same angle, the higher the measurement accuracy of the above-described displacement amount can be.

By arranging the displacement sensors 100 as illustrated in Fig. 2A, the numerical value of the diameter of the circle R or the numerical value of the diameter of the rotating member 21 becomes unnecessary when calculating the displacement vector displacement amount and the amount of change in the diameter, and thus the displacement vector displacement amount and the amount of change in the diameter can be calculated only by the measured values of the three displacement sensors 100. More specifically, the amount of change in the diameter can be calculated from the measured values of the three displacement sensors 100, and the displacement vector displacement amount can be calculated using any two of the measured values of the three displacement sensors 100. In this case, since three values of the displacement vector displacement amount can be obtained by the combination, the accuracy of the displacement vector displacement amount is improved by averaging the three values. Even when the displacement sensors 100 face each other (for example, in the case of Fig. 2B), the displacement vector displacement amount can be calculated by the calculation method described above. However, since the displacement vector displacement amount cannot be calculated with the displacement sensors 100 (for example, the displacement sensors 100 at the positions S1 and S2 in Fig. 2B) having an opposite combination, the obtained displacement vector displacement amount becomes two values, and the accuracy is lowered.

Further, in either case of Fig. 2A and Fig. 2B, when the diameter value of the circle R or the diameter value of the rotating member 21 is known, since the coordinates of the diameter of the rotating member 21 on the arrangement axis of each displacement sensor 100 are determined together with the measured values of the three displacement sensors 100, the displacement vector displacement amount and the amount of change in the diameter can be calculated from the changes in these coordinates.

The change in the diameter of the rotating member 21 and the amount of radial displacement of the rotation axis P measured by the spindle device 1 of the machine tool are caused by a centrifugal expansion amount with respect to the reference circle and the difference in thermal expansion due to the temperature difference between the installation position of the displacement sensor 100 and the measurement surface. Here, the centrifugal expansion amount is constant at any position, but the difference in thermal expansion amount becomes smaller as the displacement sensor 100 is closer to the bearing because a deviation from the bearing becomes smaller. However, the difference in thermal expansion amount can be corrected when the relationship between the temperature rise of the bearing and the temperature rise at the position of the displacement sensor 100 is clarified in advance.

Thus, according to the present embodiment, by arranging the displacement sensor 100 in the intermediate spacer 38b of the front inner ring side spacer 38 installed further on the rear side than the frontmost angular ball bearing 31a, the change amount and the displacement amount at the same level as the bearing closest to the load applied to a shaft can be measured. Therefore, it is possible to suppress an increase in the distance (distance between the tool end (working point) and an intersection (support point) between the contact angle of the bearing with respect to the rotating member 21 and the rotation axis P) between a tool end and the bearing, which greatly affects the rigidity of the bearing device 10, and it is possible to accurately measure the temperature change of the bearing due to rotation.

In the embodiment described above, the front rolling bearing 31 has two rolling bearings (angular ball bearings), but the front rolling bearing 31 may be composed of one or three or more rolling bearings.

### (Second Embodiment)

Since the configuration of the spindle device of the machine tool according to the present invention in a second embodiment is the same configuration except that a bearing device 110 is provided instead of the bearing device 10 in Fig. 1, the description thereof will be omitted.

### <Configuration of Bearing Device>

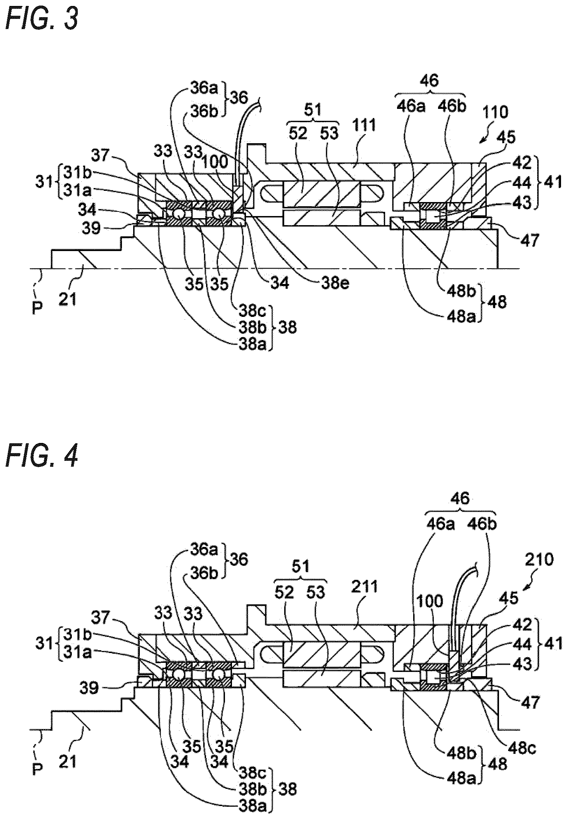

Next, the configuration of the bearing device 110 according to the present invention in the second embodiment will be described with reference to Fig. 3. In Fig. 3, the left direction will be described as the front direction and the right direction will be described as the rear direction. In Fig. 3, the illustration of the lower half of the bearing device 110 is omitted, and the illustration of the displacement sensor and the control device connected to the drive motor is omitted. Further, in Fig. 3, the same reference numerals and letters are given to the portions having the same configuration as those of Fig. 1, and the description thereof will be omitted.

The bearing device 110 includes the rotating member 21, the front rolling bearing 31, the front outer ring side spacer 36, the front inner ring side spacer 38, the nut 39, the rear rolling bearing 41, the rear outer ring side spacer 46, the nut 47, the rear inner ring side spacer 48, the drive motor 51, the displacement sensor 100, and a housing 111.

In the bearing device 110, the rotating member 21 (spindle shaft) having a hollow shape is rotatably supported by the front rolling bearing 31 and the rear rolling bearing 41 with respect to the housing 111 which is a fixing member.

The front inner ring side spacer 38 is fitted to the rotating member 21. The front inner ring side spacer 38 includes the front end spacer 38a located further on the front side than the front rolling bearing 31, the intermediate spacer 38b arranged between the pair of the angular ball bearing 31a and the angular ball bearing 31b, and the rear end spacer 38c located further on the rear side than the front rolling bearing 31. A radial outer surface (outer peripheral surface) 38e of the rear end spacer 38c faces the displacement sensor 100. In the following description, the radial outer surface 38e of the rear end spacer 38c is referred to as a facing surface. The facing surface 38e is a measurement surface for measuring the distance between the displacement sensor 100 and the rear end spacer 38c by the displacement sensor 100. The facing surface 38e is arranged further on the rear side than the angular ball bearing 31a, which is the frontmost bearing. The position of the facing surface 38e changes due to the radial displacement (center deviation) of the rotation axis P or the change in the diameter of the rotating member 21.

The displacement sensor 100 is held in the housing 111. Also, the displacement sensor 100 is located further on the rear end side in the axial direction P than the angular ball bearing 31b. The displacement sensors 100 are provided at three or more positions on the circumference of a circle defined on the plane orthogonal to the rotation axis P of the rotating member 21, which is located at the rear end spacer 38c of the front inner ring side spacer 38 closest to the drive motor 51. The displacement sensor 100 is provided so as to face the facing surface 38e in a direction orthogonal to the rotation axis P of the rotating member 21. The displacement sensor 100 measures a distance from the facing surface 38e and outputs an electric signal corresponding to the measured distance to the load measuring unit 101 of the control device 20. The displacement sensor 100 is installed on the non-rotating body side of the bearing device 110, and the measurement surface of the displacement sensor 100 faces the rotating body side of the bearing device 110.

Since the control device according to the present embodiment has the same configuration as that of Fig. 1, the description thereof will be omitted. Further, since the operation of the bearing device 110 is the same as the operation of the bearing device 10 according to the first embodiment, the description thereof will be omitted.

In the case of a general bearing device 110, from the degree of heat generation of the front rolling bearing 31 itself or the rear rolling bearing 41 itself, or the degree of heat generation or heat dissipation from the drive motor 51, in the front rolling bearing 31 and the rear rolling bearing 41, the outer ring 33 and the outer ring 42 on the non-rotating body side of the bearing device 10 in the vicinity of the drive motor 51 are thermally the most severe. In the present embodiment, the facing surface 38e of the rear end spacer 38c of the thermally severe front inner ring side spacer 38 is used as the measurement surface of the displacement sensor 100. Therefore, since it is possible to detect the influence of heat of the drive motor 51 at an early stage in addition to the machining load as well as the machining load, it is possible to take early measures against deterioration due to the influence of heat of the front rolling bearing 31 or the rear rolling bearing 41. As a result, it is possible to suppress the shortening of the life of the bearing device 110.

### (Third Embodiment)

Since the configuration of the spindle device of the machine tool according to the present invention in a third embodiment is the same configuration except that a bearing device 210 is provided instead of the bearing device 10 in Fig. 1, the description thereof will be omitted.

### <Configuration of Bearing Device>

Next, the configuration of the bearing device 210 according to the present invention in the third embodiment will be described with reference to Fig. 4. In Fig. 4, the left direction will be described as the front direction and the right direction will be described as the rear direction. In Fig. 4, the illustration of the lower half of the bearing device 210 is omitted, and the illustration of the displacement sensor and the control device connected to the drive motor is omitted. Further, in Fig. 4, the same reference numerals and letters are given to the portions having the same configuration as those of Fig. 1, and the description thereof will be omitted.

The bearing device 210 includes the rotating member 21, the front rolling bearing 31, the front outer ring side spacer 36, the front inner ring side spacer 38, the nut 39, the rear rolling bearing 41, the rear outer ring side spacer 46, the nut 47, the rear inner ring side spacer 48, the drive motor 51, the displacement sensor 100, and a housing 211.

In the bearing device 210, the rotating member 21 (spindle shaft) having a hollow shape is rotatably supported by the front rolling bearing 31 and the rear rolling bearing 41 with respect to the housing 211 which is a fixing member.

The rear inner ring side spacer 48 is fitted to the rotating member 21. A radial outer surface (outer peripheral surface) 48c of the rear end spacer 48b of the rear inner ring side spacer 48 faces the displacement sensor 100. In the following description, the radial outer surface 48c of the rear end spacer 48b is referred to as a facing surface. The facing surface 48c is a measurement surface for measuring the distance between the displacement sensor 100 and the rear end spacer 48b by the displacement sensor 100. The facing surface 48c is arranged further on the rear side than the angular ball bearing 31a, which is the frontmost bearing. The position of the facing surface 48c changes due to the radial displacement (center deviation) of the rotation axis P or the change in the diameter of the rotating member 21.

The displacement sensors 100 are installed in the vicinity of the rear rolling bearing 41 which is a free side bearing. The displacement sensors 100 are held in the housing 211 and are provided at three or more positions on the circumference of a circle defined on a plane orthogonal to the rotation axis P of the rotating member 21. The displacement sensor 100 is provided so as to face the facing surface 48c in a direction orthogonal to the rotation axis P of the rotating member 21. The displacement sensor 100 measures a distance from the facing surface 48c and outputs an electric signal corresponding to the measured distance to the load measuring unit 101 of the control device 20. The displacement sensor 100 is installed on the non-rotating body side of the bearing device 210, and the measurement surface of the displacement sensor 100 faces the rotating body side of the bearing device 210.

Since the control device according to the present embodiment has the same configuration as that of Fig. 1, the description thereof will be omitted. Further, since the operation of the bearing device 210 is the same as the operation of the bearing device 10 according to the first embodiment, the description thereof will be omitted.

Thus, according to the present embodiment, by arranging the displacement sensors 100 in the vicinity of the rear rolling bearing 41, it is possible to measure the axial displacement vector of the rotation axis P of the rotating member 21 and the change in the diameter of the rotating member 21.

### (Fourth Embodiment)

Since the configuration of the spindle device of the machine tool according to the present invention in a fourth embodiment is the same configuration except that a bearing device 310 is provided instead of the bearing device 10 in Fig. 1, the description thereof will be omitted.

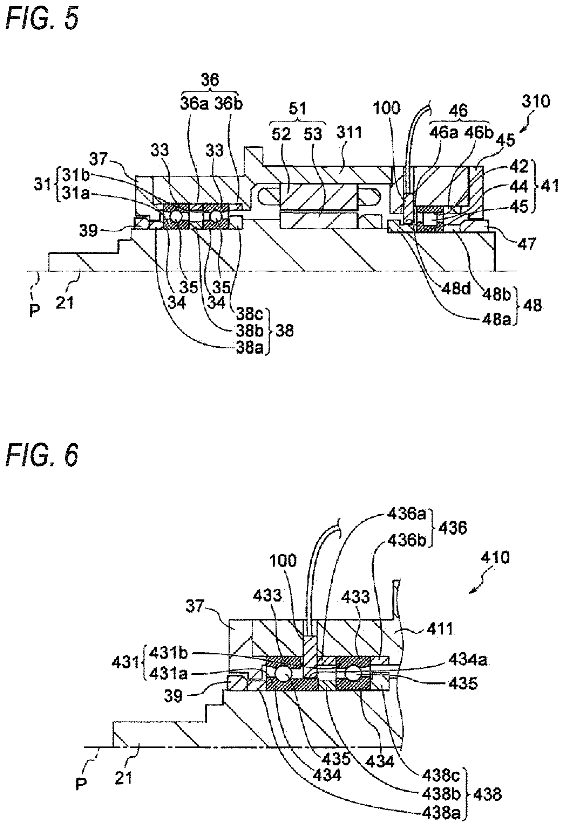

Next, the configuration of the bearing device 310 according to the present invention in the fourth embodiment will be described with reference to Fig. 5. In Fig. 5, the left direction will be described as the front direction and the right direction will be described as the rear direction. In Fig. 5, the illustration of the lower half of the bearing device 310 is omitted, and the illustration of the displacement sensor and the control device connected to the drive motor is omitted. Further, in Fig. 5, the same reference numerals and letters are given to the portions having the same configuration as those of Fig. 1, and the description thereof will be omitted.

The bearing device 310 includes the rotating member 21, the front rolling bearing 31, the front outer ring side spacer 36, the front inner ring side spacer 38, the nut 39, the rear rolling bearing 41, the rear outer ring side spacer 46, the nut 47, the rear inner ring side spacer 48, the drive motor 51, the displacement sensor 100, and a housing 311.

In the bearing device 310, the rotating member 21 (spindle shaft) having a hollow shape is rotatably supported by the front rolling bearing 31 and the rear rolling bearing 41 with respect to the housing 311 which is a fixing member. The rotating member 21 is rotationally driven by the drive motor 51 arranged between the front rolling bearing 31 and the rear rolling bearing 41.

The rear inner ring side spacer 48 is fitted to the rotating member 21. A radial outer surface (outer peripheral surface) 48d of the front end spacer 48a of the rear inner ring side spacer 48 faces the displacement sensor 100. In the following description, the radial outer surface 48d of the front end spacer 48a is referred to as a facing surface. The facing surface 48d is a measurement surface for measuring the distance between the displacement sensor 100 and the front end spacer 48a by the displacement sensor 100. The facing surface 48d is arranged further on the rear side than the angular ball bearing 31a, which is the frontmost bearing. The position of the facing surface 48d changes due to the radial displacement (center deviation) of the rotation axis P or the change in the diameter of the rotating member 21.

The displacement sensors 100 are installed in the vicinity of the rear rolling bearing 41 which is a free side bearing. The displacement sensors 100 are held in the housing 311 and are provided at three or more positions on the circumference of a circle defined on a plane orthogonal to the rotation axis P of the rotating member 21. The displacement sensor 100 is provided so as to face the facing surface 48d in a direction orthogonal to the rotation axis P of the rotating member 21. The displacement sensor 100 measures a distance from the facing surface 48d and outputs an electric signal corresponding to the measured distance to the load measuring unit 101 of the control device 20. The displacement sensor 100 is installed on the non-rotating body side of the bearing device 310, and the measurement surface of the displacement sensor 100 faces the rotating body side of the bearing device 310.

Since the control device according to the present embodiment has the same configuration as that of Fig. 1, the description thereof will be omitted. Further, since the operation of the bearing device 310 is the same as the operation of the bearing device 10 according to the first embodiment, the description thereof will be omitted.

In the present embodiment, the amount of heat flowing from the drive motor 51 to the rear rolling bearing 41 can be easily estimated by setting the position closer to the drive motor 51 than the rear rolling bearing 41 as the measurement surface of the displacement sensor 100.

### (Fifth Embodiment)

Since the configuration of the spindle device of the machine tool according to the present invention in a fifth embodiment is the same configuration except that a bearing device 410 is provided instead of the bearing device 10 in Fig. 1, the description thereof will be omitted.

Next, the configuration of the bearing device 410 according to the present invention in the fifth embodiment will be described with reference to Fig. 6. In Fig. 6, the left direction will be described as the front direction and the right direction will be described as the rear direction. In Fig. 6, a part of the bearing device 410 is illustrated, and the illustration of the displacement sensor and the control device connected to the drive motor is omitted. Further, in Fig. 6, the same reference numerals and letters are given to the portions having the same configuration as those of Fig. 1, and the description thereof will be omitted.

The bearing device 410 includes the rotating member 21, the nut 39, the rear rolling bearing 41, the rear outer ring side spacer 46, the nut 47, the rear inner ring side spacer 48, the drive motor 51, the displacement sensor 100, a housing 411, a front rolling bearing 431, a front outer ring side spacer 436, and a front inner ring side spacer 438.

In the bearing device 410, the rotating member 21 (spindle shaft) having a hollow shape is rotatably supported by the front rolling bearing 431 and the rear rolling bearing 41 with respect to the housing 411 which is a fixing member. The rotating member 21 is rotationally driven by the drive motor 51 arranged between the front rolling bearing 431 and the rear rolling bearing 41.

The front rolling bearing 431 is provided between the housing 411 and the rotating member 21, and is composed of a pair of angular ball bearings 431a and 431b arranged so as to form a back surface combination. Each of the angular ball bearings 431a and 431b includes an outer ring 433 which is a stationary raceway ring, an inner ring 434 which is a rotatory raceway ring, and a plurality of balls 435 as rolling elements arranged with a contact angle between an outer ring raceway groove which is a stationary raceway and an inner ring raceway groove which is a rotatory raceway. That is, each of the bearings 431a and 431b has the inner ring 434, the outer ring 433, and the balls 435 rotatably arranged between the inner ring 434 and the outer ring 433.

Each of the angular ball bearings 431a and 431b has the outer ring 433 fitted in the housing 411 via the outer ring side spacer 436 and is fixed by the front bearing outer ring retainer 37 bolted to the housing 411.

Further, the inner ring 434 of each of the angular ball bearings 431a and 431b is externally fitted to the rotating member 21 via the inner ring side spacer 438, and is fixed to the rotating member 21 by the nut 39 fastened to the rotating member 21. Therefore, the position of the rotating member 21 in the rotation-axis P direction is positioned by the front rolling bearing 431.

The inner ring 434 of the angular ball bearing 431a extends further on the rear side than the outer ring 433 of the angular ball bearing 431a. A radial outer surface (outer peripheral surface) 434a of the inner ring 434 of the angular ball bearing 431a faces the displacement sensor 100. In the following description, the radial outer surface 434a of the inner ring 434 of the angular ball bearing 431a is referred to as a facing surface. The facing surface 434a is a measurement surface for measuring a distance between the displacement sensor 100 and the inner ring 434 of the angular ball bearing 431a by the displacement sensor 100. The facing surface 434a is arranged further on the rear side than the angular ball bearing 431a, which is the frontmost bearing. The position of the facing surface 434a changes due to the radial displacement (center deviation) of the rotation axis P or the change in the diameter of the rotating member 21.

The front outer ring side spacer 436 includes an intermediate spacer 436a arranged between the pair of the angular ball bearing 431a and the angular ball bearing 431b, and a rear end spacer 436b located further on the rear side than the front rolling bearing 431.

The front inner ring side spacer 438 is fitted to the rotating member 21. The front inner ring side spacer 438 includes a front end spacer 438a located further on the front side than the front rolling bearing 431, an intermediate spacer 438b arranged between the pair of the angular ball bearing 431a and the angular ball bearing 431b, and a rear end spacer 438c located further on the rear side than the front rolling bearing 431.

The displacement sensor 100 is provided so as to face the facing surface 434a in a direction orthogonal to the rotation axis P of the rotating member 21. The displacement sensor 100 measures a distance from the facing surface 434a and outputs an electric signal corresponding to the measured distance to the load measuring unit 101 of the control device 20. The displacement sensor 100 is installed on the non-rotating body side of the bearing device 410, and the measurement surface of the displacement sensor 100 faces the rotating body side of the bearing device 410.

Since the control device according to the present embodiment has the same configuration as that of Fig. 1, the description thereof will be omitted. Further, since the operation of the bearing device 410 is the same as the operation of the bearing device 10 according to the first embodiment, the description thereof will be omitted.

In the present embodiment, by using the facing surface 434a of the inner ring 434 of the front rolling bearing 431 as the measurement surface of the displacement sensor 100, the change in the diameter of the inner ring 434 of the front rolling bearing 431 can be measured more accurately.

### (Sixth Embodiment)

Since the configuration of the spindle device of the machine tool according to the present invention in a sixth embodiment is the same configuration except that a bearing device 510 is provided instead of the bearing device 10 in Fig. 1, the description thereof will be omitted.

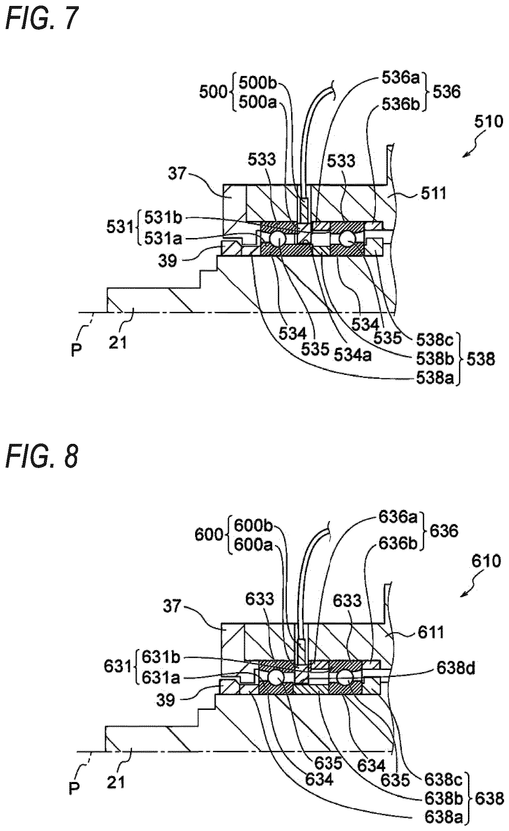

Next, the configuration of the bearing device 510 according to the present invention in the sixth embodiment will be described with reference to Fig. 7. In Fig. 7, the left direction will be described as the front direction and the right direction will be described as the rear direction. In Fig. 7, a part of the bearing device 510 is illustrated, and the illustration of the displacement sensor and the control device connected to the drive motor is omitted. Further, in Fig. 7, the same reference numerals and letters are given to the portions having the same configuration as those of Fig. 1, and the description thereof will be omitted.

The bearing device 510 includes the rotating member 21, the nut 39, the rear rolling bearing 41, the rear outer ring side spacer 46, the nut 47, the rear inner ring side spacer 48, the drive motor 51, a displacement sensor 500, a housing 511, a front rolling bearing 531, a front outer ring side spacer 536, and a front inner ring side spacer 538.

In the bearing device 510, the rotating member 21 (spindle shaft) having a hollow shape is rotatably supported by the front rolling bearing 531 and the rear rolling bearing 41 with respect to the housing 511 which is a fixing member. The rotating member 21 is rotationally driven by the drive motor 51 arranged between the front rolling bearing 531 and the rear rolling bearing 41.

The front rolling bearing 531 is provided between the housing 511 and the rotating member 21, and is composed of a pair of angular ball bearings 531a and 531b arranged so as to form a back surface combination. Each of the angular ball bearings 531a and 531b includes an outer ring 533 which is a stationary raceway ring, an inner ring 534 which is a rotatory raceway ring, and a plurality of balls 535 as rolling elements arranged with a contact angle between an outer ring raceway groove which is a stationary raceway and an inner ring raceway groove which is a rotatory raceway. That is, each of the bearings 531a and 531b has the inner ring 534, the outer ring 533, and the balls 535 rotatably arranged between the inner ring 534 and the outer ring 533.

Each of the angular ball bearings 531a and 531b has the outer ring 533 fitted in the housing 511 via the outer ring side spacer 536 and is fixed by the front bearing outer ring retainer 37 bolted to the housing 511.

Further, the inner ring 534 of each of the angular ball bearings 531a and 531b is externally fitted to the rotating member 21 via the inner ring side spacer 538, and is fixed to the rotating member 21 by the nut 39 fastened to the rotating member 21. Therefore, the position of the rotating member 21 in the rotation-axis P direction is positioned by the front rolling bearing 531.

Each of the outer ring 533 and the inner ring 534 of the angular ball bearing 531a is longer in the rotation-axis P direction than each of the outer ring 533 and the inner ring 534 of the angular ball bearing 531b. The outer ring 533 of the angular ball bearing 531a holds the displacement sensor 500. A radial outer surface (outer peripheral surface) 534a of the inner ring 534 faces the displacement sensor 500. In the following description, the radial outer surface 534a of the inner ring 534 of the angular ball bearing 531a is referred to as a facing surface. The facing surface 534a is a measurement surface for measuring a distance between the displacement sensor 500 and the inner ring 534 of the angular ball bearing 531a by the displacement sensor 500. The facing surface 534a is arranged further on the rear side than the angular ball bearing 531a, which is the frontmost bearing. The position of the facing surface 534a changes due to the radial displacement (center deviation) of the rotation axis P or the change in the diameter of the rotating member 21.

The front outer ring side spacer 536 is fitted to the rotating member 21. The front outer ring side spacer 536 includes an intermediate spacer 536a arranged between the pair of the angular ball bearing 531a and the angular ball bearing 531b, and a rear end spacer 536b located further on the rear side than the front rolling bearing 531.

The front inner ring side spacer 538 is fitted to the rotating member 21. The front inner ring side spacer 538 includes a front end spacer 538a located further on the front side than the front rolling bearing 531, an intermediate spacer 538b arranged between the pair of the angular ball bearing 531a and the angular ball bearing 531b, and a rear end spacer 538c located further on the rear side than the front rolling bearing 531.

The displacement sensors 500 are provided at three or more positions on the circumference of a circle defined on a plane orthogonal to the rotation axis P of the rotating member 21. That is, in the present embodiment, three displacement sensors 500 are provided.

The displacement sensor 500 includes a first connector 500a held in the outer ring 533 of the angular ball bearing 53 1a, and a second connector 500b which is freely inserted and removed from the first connector 500a and is connected to the control device 20 through the housing 511.

The first connector 500a of the displacement sensor 500 is provided facing the facing surface 534a in a direction orthogonal to the rotation axis P of the rotating member 21. The displacement sensor 500 measures a distance from the facing surface 534a and outputs an electric signal corresponding to the measured distance to the load measuring unit 101 of the control device 20. The displacement sensor 500 is installed on the non-rotating body side of the bearing device 510, and the measurement surface of the displacement sensor 500 faces the rotating body side of the bearing device 510.

The displacement sensor 500 is a non-contact displacement sensor such as an eddy current displacement sensor, a capacitance displacement sensor, a laser displacement meter, or an air gap sensor.

Since the control device according to the present embodiment has the same configuration as that of Fig. 1, the description thereof will be omitted. Further, since the operation of the bearing device 510 is the same as the operation of the bearing device 10 according to the first embodiment, the description thereof will be omitted.

In the present embodiment, by holding the displacement sensor 500 in the outer ring 533 of the angular ball bearing 531a and integrating the displacement sensor 500 and the outer ring 533, the gap amount between the displacement sensor 500 and the facing surface 534a can be adjusted in advance.

Further, in the present embodiment, by integrating the displacement sensor 500 and the outer ring 533, it is possible to avoid the influence of a deviation between the housing 511 and the outer ring 533 when measuring the axial displacement vector of the rotation axis P of the rotating member 21 and the change in the diameter of the rotating member 21.

Further, in the present embodiment, when the displacement sensor 500 and the control device 20 are connected by wire, the displacement sensor 500 is configured to be a connector type, and thus the second connector 500b can be connected to the first connector 500a after the first connector 500a is assembled so as to be held in the outer ring 533. Therefore, the displacement sensor 500 can be installed without disconnecting a signal line connecting the displacement sensor 500 and the control device 20.

Further, in the present embodiment, by using the facing surface 534a of the inner ring 534 as the measurement surface, it is possible to accurately measure the change in the diameter of the inner ring 534 of the front rolling bearing 531.

### (Seventh Embodiment)

Since the configuration of the spindle device of the machine tool according to the present invention in a seventh embodiment is the same configuration except that a bearing device 610 is provided instead of the bearing device 10 in Fig. 1, the description thereof will be omitted.

Next, the configuration of the bearing device 610 according to the present invention in the seventh embodiment will be described with reference to Fig. 8. In Fig. 8, the left direction will be described as the front direction and the right direction will be described as the rear direction. In Fig. 8, a part of the bearing device 610 is illustrated, and the illustration of the displacement sensor and the control device connected to the drive motor is omitted. Further, in Fig. 8, the same reference numerals and letters are given to the portions having the same configuration as those of Fig. 1, and the description thereof will be omitted.

The bearing device 610 includes the rotating member 21, the nut 39, the rear rolling bearing 41, the rear outer ring side spacer 46, the nut 47, the rear inner ring side spacer 48, the drive motor 51, a displacement sensor 600, a housing 611, a front rolling bearing 631, a front outer ring side spacer 636, and a front inner ring side spacer 638.

In the bearing device 610, the rotating member 21 (spindle shaft) having a hollow shape is rotatably supported by the front rolling bearing 631 and the rear rolling bearing 41 with respect to the housing 611 which is a fixing member. The rotating member 21 is rotationally driven by the drive motor 51 arranged between the front rolling bearing 631 and the rear rolling bearing 41.

The front rolling bearing 631 is provided between the housing 611 and the rotating member 21, and is composed of a pair of angular ball bearings 631a and 631b arranged so as to form a back surface combination. Each of the angular ball bearings 631a and 631b includes an outer ring 633 which is a stationary raceway ring, an inner ring 634 which is a rotatory raceway ring, and a plurality of balls 635 as rolling elements arranged with a contact angle between an outer ring raceway groove which is a stationary raceway and an inner ring raceway groove which is a rotatory raceway. That is, each of the bearings 631a and 631b has the inner ring 634, the outer ring 633, and the balls 635 rotatably arranged between the inner ring 634 and the outer ring 633.

Each of the angular ball bearings 631a and 631b has the outer ring 633 fitted in the housing 611 via the outer ring side spacer 636 and is fixed by the front bearing outer ring retainer 37 bolted to the housing 611.

Further, the inner ring 634 of each of the angular ball bearings 631a and 631b is externally fitted to the rotating member 21 via the inner ring side spacer 638, and is fixed to the rotating member 21 by the nut 39 fastened to the rotating member 21. Therefore, the position of the rotating member 21 in the rotation-axis P direction is positioned by the front rolling bearing 631.

The outer ring 633 of the angular ball bearing 631a extends further on the rear side than the inner ring 634 of the angular ball bearing 631a and holds the displacement sensor 600.

The front outer ring side spacer 636 includes an intermediate spacer 636a arranged between the pair of the angular ball bearing 631a and the angular ball bearing 631b, and a rear end spacer 636b located further on the rear side than the front rolling bearing 631.

The front inner ring side spacer 638 is fitted to the rotating member 21. The front inner ring side spacer 638 includes a front end spacer 638a located further on the front side than the front rolling bearing 631, an intermediate spacer 638b arranged between the pair of the angular ball bearing 631a and the angular ball bearing 631b, and a rear end spacer 638c located further on the rear side than the front rolling bearing 631. A radial outer surface (outer peripheral surface) 638d of the intermediate spacer 638b faces the displacement sensor 600. In the following description, the radial outer surface 638d of the intermediate spacer 638b is referred to as a facing surface. The facing surface 638d is a measurement surface for measuring a distance between the displacement sensor 600 and the intermediate spacer 638b by the displacement sensor 600. The facing surface 638d is arranged further on the rear side than the angular ball bearing 631a, which is the frontmost bearing. The position of the facing surface 638d changes due to the radial displacement (center deviation) of the rotation axis P or the change in the diameter of the rotating member 21.

The displacement sensors 600 are provided at three or more positions on the circumference of a circle defined on a plane orthogonal to the rotation axis P of the rotating member 21. That is, in the present embodiment, three displacement sensors 600 are provided.

The displacement sensor 600 includes a first connector 600a held in the outer ring 633 of the angular ball bearing 631a, and a second connector 600b which is freely inserted and removed from the first connector 600a and is connected to the control device 20 through the housing 611.

The first connector 600a of the displacement sensor 600 is provided facing the facing surface 638d in a direction orthogonal to the rotation axis P of the rotating member 21. The displacement sensor 600 measures a distance from the facing surface 638d and outputs an electric signal corresponding to the measured distance to the load measuring unit 101 of the control device 20. The displacement sensor 600 is installed on the non-rotating body side of the bearing device 610, and the measurement surface of the displacement sensor 600 faces the rotating body side of the bearing device 610.

The displacement sensor 600 is a non-contact displacement sensor such as an eddy current displacement sensor, a capacitance displacement sensor, a laser displacement meter, or an air gap sensor.

Since the control device according to the present embodiment has the same configuration as that of Fig. 1, the description thereof will be omitted. Further, since the operation of the bearing device 610 is the same as the operation of the bearing device 10 according to the first embodiment, the description thereof will be omitted.

In the present embodiment, the gap amount between the displacement sensor 600 and the facing surface 638d can be adjusted in advance by holding the displacement sensor 600 in the outer ring 633 of the angular ball bearing 631a.

Further, in the present embodiment, by integrating the displacement sensor 600 and the outer ring 633, it is possible to avoid the influence of a deviation between the housing 611 and the outer ring 633 when measuring the axial displacement vector of the rotation axis P of the rotating member 21 and the change in the diameter of the rotating member 21.

### (Eighth Embodiment)

Since the configuration of the spindle device of the machine tool according to the present invention in an eighth embodiment is the same configuration except that a bearing device 710 is provided instead of the bearing device 10 in Fig. 1, the description thereof will be omitted.

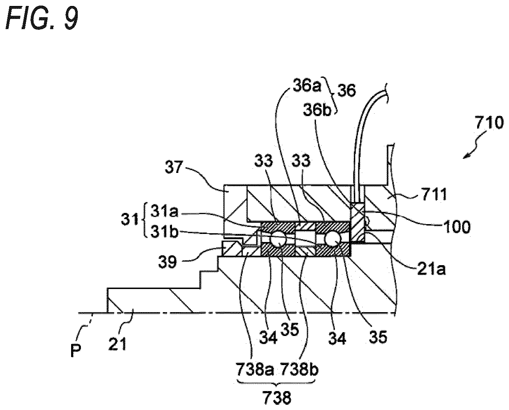

Next, the configuration of the bearing device 710 according to the present invention in the eighth embodiment will be described with reference to Fig. 9. In Fig. 9, the left direction will be described as the front direction and the right direction will be described as the rear direction. In Fig. 9, a part of the bearing device 710 is illustrated, and the illustration of the displacement sensor and the control device connected to the drive motor is omitted. Further, in Fig. 9, the same reference numerals and letters are given to the portions having the same configuration as those of Fig. 1, and the description thereof will be omitted.

The bearing device 710 includes the rotating member 21, the front rolling bearing 31, the front outer ring side spacer 36, the nut 39, the rear rolling bearing 41, the rear outer ring side spacer 46, the nut 47, the rear inner ring side spacer 48, the drive motor 51, the displacement sensor 100, a housing 711, and a front inner ring side spacer 738.

In the bearing device 710, the rotating member 21 (spindle shaft) having a hollow shape is rotatably supported by the front rolling bearing 31 and the rear rolling bearing 41 with respect to the housing 711 which is a fixing member.

The rotating member 21 is rotationally driven by the drive motor 51 arranged between the front rolling bearing 31 and the rear rolling bearing 41. A radial outer surface (outer peripheral surface) 21a of the rotating member 21 faces the displacement sensor 100. In the following description, the radial outer surface 21a of the rotating member 21 is referred to as a facing surface. The facing surface 21a is a measurement surface for measuring a distance between the displacement sensor 100 and the rotating member 21 by the displacement sensor 100. The facing surface 21a is arranged further on the rear side than the angular ball bearing 31a, which is the frontmost bearing. The position of the facing surface 21a changes due to the radial displacement (center deviation) of the rotation axis P or the change in the diameter of the rotating member 21.

The front inner ring side spacer 738 is fitted to the rotating member 21. The front inner ring side spacer 738 includes a front end spacer 738a located further on the front side than the front rolling bearing 31, and an intermediate spacer 738b arranged between the pair of the angular ball bearing 31a and the angular ball bearing 31b.

The displacement sensor 100 is held in the housing 711 and is provided at three or more positions on the circumference of a circle defined on a plane orthogonal to the rotation axis P of the rotating member 21.

The displacement sensor 100 is provided so as to face the facing surface 21a in a direction orthogonal to the rotation axis P of the rotating member 21. The displacement sensor 100 measures a distance from the facing surface 21a and outputs an electric signal corresponding to the measured distance to the load measuring unit 101 of the control device 20. The displacement sensor 100 is installed on the non-rotating body side of the bearing device 710, and the measurement surface of the displacement sensor 100 faces the rotating body side of the bearing device 710.

Since the control device according to the present embodiment has the same configuration as that of Fig. 1, the description thereof will be omitted. Further, since the operation of the bearing device 710 is the same as the operation of the bearing device 10 according to the first embodiment, the description thereof will be omitted.

In the present embodiment, by providing the measurement surface on the rotating member 21, the number of components can be reduced and the configuration can be simplified, and it is possible to eliminate the influence of the error of the gap amount between the displacement sensor 100 and the measurement surface 21a due to a deviation between the spacer and the rotation axis P of the rotating member, which occurs when the spacer and the rotating member 21 are fitted in the gap.

### (Ninth Embodiment)

### <Configuration of Spindle Device of Machine Tool>

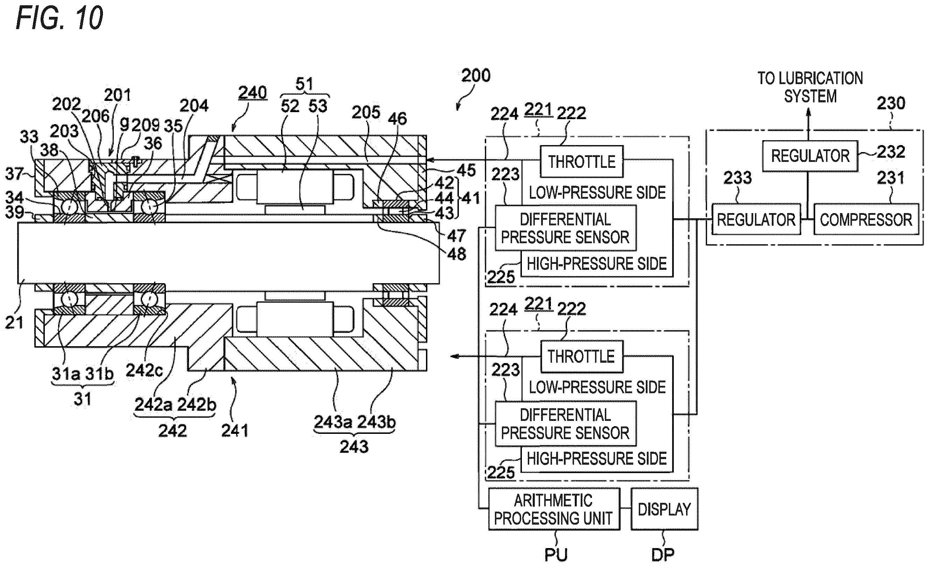

The configuration of the spindle device of the machine tool according to the present invention in a ninth embodiment will be described with reference to Fig. 10.

A spindle device 200 of the machine tool has a pressure loss measuring unit 221, a compressed gas supply unit 230, a bearing device 240, an arithmetic processing unit PU, and a display DP.

Specifically, the spindle device 200 of the machine tool includes, as a set, a displacement detecting unit 201 which detects the radial displacement of the rotating member 21 using compressed gas, and the pressure loss measuring unit 221 which supplies compressed gas to the displacement detecting unit 201 and measures the pressure loss according to a gap between the front outer ring side spacer 36 and the front inner ring side spacer 38. A plurality of sets (here, two sets) of the displacement detecting unit 201 and the pressure loss measuring unit 221 are provided in a circumferential direction. Further, the spindle device 200 includes the arithmetic processing unit PU which calculates a load amount acting on the rotating member 21 based on the measurement result of each pressure loss measuring unit 221.

The displacement detecting units 201 are provided in three or more directions on the circumference of the circle R defined on a plane orthogonal to the rotation axis P of the rotating member 21. The displacement detecting unit 201 can be arranged at any position of the rotating member 21 in the rotation-axis P direction. More preferably, it is desirable to arrange the displacement detecting unit 201 near the rear of the frontmost row bearing.

Each of the displacement detecting units 201 is configured to include the front outer ring side spacer 36 and the front inner ring side spacer 38 of the front rolling bearing 31. That is, the front outer ring side spacer 36 includes an outer peripheral side ring portion in contact with axial end surfaces of the outer rings 33 of the angular ball bearings 31a and 31b facing each other, and an inner peripheral side ring portion narrower than the outer peripheral side ring portion.

The outer peripheral side ring portion is formed with a recess portion recessed from the outside to the inside in a central portion in an axial direction. An inner peripheral surface of the inner peripheral side ring portion faces an outer peripheral surface of the front inner ring side spacer 38 so as to form a predetermined measurement target gap g.

Then, a funnel-shaped compressed gas discharge nozzle 202 extending radially from a bottom of the recess portion 36c of the outer peripheral side ring portion 36a to the inner peripheral surface is formed, and the compressed gas is discharged from the compressed gas discharge nozzle 202 to the measurement target gap g between the front outer ring side spacer 36 and the front inner ring side spacer 38.

Here, in many cases, the spindle shaft of the machine tool is a hollow shaft because a drawbar is provided in an inner diameter portion of the shaft as a mechanism for gripping the tool, and it is assumed to rotate at high speed in order to improve processing efficiency. Therefore, particularly when using high-speed rotation, rotating members such as the rotating member 21 and the front inner ring side spacer 38 expand by several to several tens of µm due to centrifugal force. Further, during spindle rotation, a temperature difference occurs between the housing 241 and the rotating member 21, and in many cases, the rotating member 21 is higher. As a result, the amount of gap between the housing 241 and the rotating member 21 is reduced by several to several tens of µm.

Also, in the spindle of the machine tool, the gap formed between the housing 241 and the rotating member 21, such as the gap between the front outer ring side spacer 36 and the front inner ring side spacer 38, is set several tenths of a millimeter at most in order to prevent foreign matter from entering the inside of the spindle or the rolling bearing 31.

Therefore, the measurement target gap g between the front outer ring side spacer 36 and the front inner ring side spacer 38 is set to 0.05 mm to 0.5 mm when the rotating member 21 is stationary. However, since the amount of change in pressure loss with respect to the radial displacement of the rotating member 21 increases as the gap amount decreases, it is preferable to set the measurement target gap g to 0.05 mm to 0.2 mm.

In order to accurately measure the measurement target gap g between the front outer ring side spacer 36 and the front inner ring side spacer 38 during operation, it is desirable that the front inner ring side spacer 38 provided in the displacement detecting unit 201 be coaxial with the rotating member 21 as much as possible. Therefore, it is desirable that the front inner ring side spacer 38 is fitted to the shaft with an intermediate fit or a tight fit.

The housing 241 is formed with a circular opening portion 203 coaxially with the compressed gas discharge nozzle 202, reaching the recess portion of the front outer ring side spacer 36 from the outer peripheral surface and reducing the inner diameter in two steps. As illustrated in Fig. 10, one end of a compressed gas supply passage 204 formed on a rear side wall is opened in the opening portion 203. As illustrated in Fig. 10, the other end of the compressed gas supply passage 204 communicates with a compressed gas supply passage 205 formed by opening to a rear end formed in the housing 241 and extending forward in the axial direction.

Further, as illustrated in Fig. 10, a gas connection portion 206 as a gas direction change portion which changes the direction of the compressed gas supplied from the compressed gas supply passage 204 from the axial direction to the radial direction and supplies the compressed gas to the compressed gas discharge nozzle 202 is mounted in the opening portion 203. The gas connection portion 206 has a shape which can be fitted into the opening portion 203, for example, an outer peripheral shape having the same shape as the inner peripheral shape of the opening portion 203. The gas connection portion 206 is internally formed with a gas passage communicating with the opening portion 203 and another gas passage having one end communicating with the gas passage and the other end communicating with the compressed gas discharge nozzle 202. An O-ring is arranged between a side wall of the gas connection portion 206 and an inner wall of the opening portion 203, and an O-ring is similarly arranged between a bottom surface of the gas connection portion 206 and a bottom surface of the recess portion. These O-rings prevent the leakage of compressed air.

Further, as illustrated in Fig. 10, the gas connection portion 206 is positioned in the radial direction by making the stepped portion of the outer peripheral surface in contact with a stepped portion of the inner peripheral surface of the opening portion 203. Further, the gas connection portion 206 is prevented from coming out of the opening portion 203 by making the outer end surface in the radial direction in contact with a holding piece 209 which is screwed to the outer peripheral surface of the housing 241. The gas connection portion 206 is not limited to the case where the holding piece 209 prevents the gas connection portion 206 from coming off, and a flange portion can be formed on the outer peripheral surface side of the gas connection portion 206 and the flange portion can be screwed. Any fixing method can be used as a method for fixing the gas connection portion 206 to the housing 241.

As illustrated in Fig. 10, in the pressure loss measuring unit 221, compressed gas is supplied from the compressed gas supply unit 230 to a lubrication system (not shown) by oil-air lubrication or oil mist lubrication which supplies lubricating oil to the front rolling bearing 31 and the rear rolling bearing 41. The compressed gas supply unit 230 includes a compressor 231 which discharges compressed gas, a regulator 232 for the lubrication system which adjusts the pressure of the compressed gas discharged from the compressor 231, and a regulator 233 for pressure loss measurement which is connected in parallel with the regulator 232. The ninth embodiment is not limited to oil-air lubrication and oil mist lubrication, for example, can be applied to grease lubrication and the like. Lubricant oil and greases are examples of lubricants. The lubrication system is a lubricant supply unit which supplies the lubricant to the bearings 31 and 41.

The pressure loss measuring unit 221 includes a throttle 222 inserted in a supply path of the compressed gas, and a differential pressure sensor 223 for detecting the differential pressure on the upstream side and the downstream side of the throttle.

The throttle 222 is inserted in a pipe 224 connecting the regulator 233 and an opening of the compressed gas supply passage 205 formed in the housing 241. A throttle amount of the throttle 222 is set so that the differential pressure detection value detected by the differential pressure sensor 223 when the radial displacement of the rotating member 21 is "0" while the rotating member 21 is rotating becomes a preset value. As a result, the pressure on the downstream side of the throttle 222 represents a pressure loss only according to the radial displacement of the rotating member 21 in consideration of the flow path resistance due to the pipe length and the pipe diameter from the throttle 222 to the displacement detecting unit 201.

The low-pressure side of the differential pressure sensor 223 is connected to the pipe 224 on the downstream side of the throttle 222, and the high-pressure side is connected to the regulator 233 via the pipe 225. In the differential pressure sensor 223, the differential pressure between the compressed air pressure supplied from the regulator 233 and the downstream side pressure of the throttle 222 connected to the displacement detecting unit 201, that is, the pressure loss according to the displacement of the rotating member 21 in the displacement detecting unit 201 is detected, and then the detected differential pressure detection value is output as an analog value or a digital value.

The arithmetic processing unit PU is composed of an arithmetic processing device such as a microcomputer. In the arithmetic processing unit PU, the differential pressure detection value output from the differential pressure sensor 223 of each pressure loss measuring unit 221 is input, and the converted amount of radial displacement of the rotating member 21 is calculated based on the differential pressure detection value. Further, the arithmetic processing unit PU calculates the load amount given to the rotating member 21 by multiplying the calculated converted amount of the radial displacement of the rotating member 21 by the axial rigidity value at the axial position of the compressed gas discharge nozzle 202 calculated in advance, and then the arithmetic processing unit PU outputs the arithmetic result to the display DP and displays the arithmetic result on the display DP. Here, the axial rigidity value is calculated based on the load point, the bearing position of the front rolling bearing 31, the bearing rigidity, the axial rigidity, the axial position of the compressed gas discharge nozzle 202 of the displacement detecting unit 201, and the like.

The load amount given to the rotating member 21 is not limited to the case of being calculated by the above-described calculation. For example, by repeatedly measuring the differential pressure detection value output from the differential pressure sensor 223 of the pressure loss measuring unit 221 when applying a known load to the rotating member 21, a load calculation map showing the relationship between the load and the differential pressure detection value is created, and the load calculation map is stored in a storage portion of the arithmetic processing unit PU. In this case, the load amount can be calculated directly from the differential pressure detection value by referring to the load calculation map based on the differential pressure detection value detected by the differential pressure sensor 223 at the time of cutting. By doing so, it is not necessary to convert the differential pressure detection value of the differential pressure sensor 223 into the displacement amount, and thus the load amount can be easily calculated. In this case, instead of using the load calculation map, the load amount can be calculated by obtaining the equation of the characteristic line of the load calculation map and substituting the differential pressure detection value of the differential pressure sensor 223 into the obtained equation.

Since two or more sets of the displacement detecting unit 201 and the pressure loss measuring unit 221 are provided as described above, each pressure loss measuring unit 221 is connected in parallel to the regulator 233 as illustrated in Fig. 10.

### <Configuration of Bearing Device>

The configuration of the bearing device according to the present invention in the ninth embodiment will be described with reference to Fig. 10. In Fig. 10, the same reference numerals and letters are given to the portions having the same configuration as those of Fig. 1, and the description thereof will be omitted.

The bearing device 240 includes the rotating member 21, the front rolling bearing 31, the front outer ring side spacer 36, the front inner ring side spacer 38, the nut 39, the rear rolling bearing 41, the rear outer ring side spacer 46, the nut 47, the rear inner ring side spacer 48, the drive motor 51, and the housing 241.

The housing 241 is composed of a front cylindrical portion 242 and a rear cylindrical portion 243 divided into two parts between the front rolling bearing 31 and the drive motor 51.

The front cylindrical portion 242 is composed of a small outer diameter portion 242a on the front side having a small outer diameter and a large outer diameter portion 242b on the rear side having a larger outer diameter as compared with that of the small outer diameter portion 242a. Inner peripheral surfaces of the small outer diameter portion 242a and the large outer diameter portion 242b are formed to have the same inner diameter, but a bearing accommodating step portion 242c for accommodating the front rolling bearing 31 is formed from the front end side to the rear end side of the small outer diameter portion 242a.

On the contrary, the rear cylindrical portion 243 is formed by a large inner diameter portion 243a having a large inner diameter and a small inner diameter portion 243b having an inner diameter smaller than that of the large inner diameter portion 243a.

In each of the angular ball bearings 31a and 31b, the outer ring 33 is fitted into the bearing accommodating step portion 242c formed in the front cylindrical portion 242 of the housing 241 via the front outer ring side spacer 36. Also, each of the angular ball bearings 31a and 31b is fixed by the front bearing outer ring retainer 37 bolted to the front cylindrical portion 242 of the housing 241.

The outer ring 42 of the rear rolling bearing 41 is fitted in the small inner diameter portion 243b of the rear cylindrical portion 243 of the housing 241. Further, the outer ring 42 of the rear rolling bearing 41 is fixed to the small inner diameter portion 243b via the rear outer ring side spacer 46 by the rear bearing retainer 45 bolted to the small inner diameter portion 243b.

The drive motor 51 is composed of the stator 52 fitted in the large inner diameter portion 243a of the rear cylindrical portion 242 of the housing 241 and the rotor 53 externally fitted to the rotating member 21 and facing the inner peripheral side of the stator 52 via a gap.

### <Operation of Spindle Device of Machine Tool>

The operation of the spindle device of the machine tool according to the present invention in the ninth embodiment will be described with reference to Fig. 10.

First, the compressed gas is supplied from the compressed gas supply unit 230 to the pressure loss measuring unit 221, and as described above, in a state where the rotating member 21 of the bearing device 240 is rotated and the radial displacement of the rotating member 21 is "0", the throttle amount of the throttle 222 of the pressure loss measuring unit 221 is adjusted so that the differential pressure detection value detected by the differential pressure sensor 223 becomes a preset value.

Next, in a state where the rotating member 21 of the bearing device 240 is stopped, the compressor 231 is started to adjust the pressure of the compressed gas with the regulator 232, and then the compressed gas having a set pressure is supplied to a lubricating oil supply system (not illustrated) for the front rolling bearing 31 and the rear rolling bearing 41, and the supply of the lubricant to the front rolling bearing 31 and the rear rolling bearing 41 is started.

At the same time as, or before and after the start of the supply of the lubricant, the pressure of the compressed gas discharged from the compressor 231 is adjusted by the regulator 233 and the compressed gas is supplied to the pressure loss measuring unit 221.

The compressed gas supplied to the pressure loss measuring unit 221 is input to the compressed gas supply passage 205 of the housing 241 via the throttle 222. The compressed gas input to the compressed gas supply passage 205 is turned 90 degrees from the axial direction to the radial direction at the gas connection portion 206 from the compressed gas supply passage 204 and is supplied to the compressed gas discharge nozzle 202.

The compressed gas supplied to the compressed gas discharge nozzle 202 is supplied to the measurement target gap g between the front outer ring side spacer 36 and the front inner ring side spacer 38. Then, when the distance of the measurement target gap g, that is, the radial displacement of the rotating member 21 increases from the state of "0", the distance of the measurement target gap g becomes smaller, and the pressure loss becomes smaller accordingly. On the contrary, when the radial displacement becomes smaller, the distance of the measurement target gap g becomes larger, and the pressure loss becomes larger accordingly. Here, as described above, the measurement target gap g has a smaller gap due to the fact that, when the rotating member 21 of the hollow shaft rotates at high speed, the rotating members such as the rotating member 21 and the front inner ring side spacer 38 expand due to centrifugal force, and the temperature of the rotating member 21 becomes higher than that of the housing 241.

Therefore, in the no-load state where the radial displacement of the rotating member 21 is "0", the differential pressure detection value detected by the differential pressure sensor 223 becomes a preset value, and the differential pressure detection value indicating that the radial displacement of the rotating member 21 is "0" is output to the arithmetic processing unit PU.

Therefore, in the arithmetic processing unit PU, the differential pressure detection value input from the differential pressure sensor 223 is converted into the radial displacement of the rotating member 21, and then the load amount applied to the rotating member 21 is calculated by multiplying the converted radial displacement by a preset axial rigidity value. The calculated load amount is output to the display DP and displayed. In this case, since the radial displacement is "0", the load amount displayed on the display DP is "0".

When cutting is started in this state, for example, a cutting load is applied to the rotating member 21, and a radial displacement according to the cutting load is generated in the rotating member 21. The radial displacement depends on the direction of the cutting load applied to the rotating member 21.

Therefore, a pressure loss according to the radial displacement occurs in the compressed gas discharged from the compressed gas discharge nozzles 202 of the plurality of displacement detecting units 201 according to the radial displacement of the rotating member 21. The pressure loss is detected as a differential pressure detection value by the differential pressure sensor 223 of the pressure loss measuring unit 221.

By supplying the detected differential pressure detection value to the arithmetic processing unit PU, the differential pressure detection value is converted into the radial displacement of the rotating member 21 as described above in the arithmetic processing unit PU, and then the load amount applied to the rotating member 21 is calculated by multiplying the converted radial displacement by a preset axial rigidity value. The calculated load amount is output to the display DP and displayed.

Thus, according to the present embodiment, by supplying compressed gas to the displacement detecting unit 201 composed of the front outer ring side spacer 36 and the front inner ring side spacer 38 of the front rolling bearing 31, compressed gas is discharged from the compressed gas discharge nozzle 202 to the measurement target gap g between the front outer ring side spacer 36 and the front inner ring side spacer 38. Therefore, a pressure loss of the compressed gas occurs according to the distance of the measurement target gap g, that is, the radial displacement of the rotating member 21. By detecting the pressure loss with the differential pressure sensor 223 of the pressure loss measuring unit 221 provided outside the housing 241 and supplying the detected differential pressure detection value to the arithmetic processing unit PU, the load amount applied to the rotating member 21 can be calculated.

Therefore, in the displacement detecting unit 201, with a simple configuration in which only the front outer ring side spacer 36 and the front inner ring side spacer 38 which face each other through the predetermined measurement target gap g, the compressed gas supply passage 204, the gas connection portion 206, and the compressed gas discharge nozzle 202 are provided, it is possible to generate a pressure loss according to the radial displacement of the rotating member 21. Therefore, since the displacement detecting unit 201 does not require an electrically operating component, it is not necessary to consider wiring routing or electrical insulation.

In the pressure loss measuring unit 221, the compressed gas is supplied to the displacement detecting unit 201 via the throttle 222, and then by detecting the differential pressure between the pressure on the downstream side of the throttle 222, that is, the displacement detecting unit 201 side, and the original pressure of the compressed gas supplied to the pressure loss measuring unit 221, the pressure loss in the displacement detecting unit 201 can be measured. The detected differential pressure detection value can be converted into the radial displacement of the rotating member 21 and then the load amount applied to the rotating member 21 can be calculated, or the load amount directly applied to the rotating member 21 can be calculated from the differential pressure.

Therefore, when the rotating member 21 is rotatably supported by a rolling bearing, with a simple configuration, it is possible to calculate the radial displacement of the rotating member 21 using the compressed gas, and to calculate the load amount applied to the rotating member 21.

In the present embodiment, a case where the compressed gas supply passages 204 and 205 extending in the axial direction are formed in the housing 241 has been described, but the present invention is not limited to this. The gas passage of the gas connection portion 206 may be extended to the outer peripheral side to open, and the pressure loss measuring unit 221 may be connected to this opening portion. Alternatively, the compressed gas supply passage 205 may be omitted, the compressed gas supply passage 204 may be opened on the outer peripheral surface of the housing 241, and the pressure loss measuring unit 221 may be connected to this opening portion.

Further, in the present embodiment, a case where, in a state where the rotating member 21 of the bearing device 240 is rotated and the radial displacement of the rotating member 21 is "0", the throttle amount of the throttle 222 of the pressure loss measuring unit 221 is adjusted so that the differential pressure detection value detected by the differential pressure sensor 223 becomes a preset value is described. However, the present invention is not limited to this adjustment. For example, in a state where the rotating member 21 of the bearing device 240 is stopped (0 rotation) without an external load, the differential pressure of each pressure loss measuring unit 221 is adjusted to a certain value by the throttle 222 of the pressure loss measuring unit 221, and this state is set as displacement 0. Then, when the rotation speed of the rotating member 21 is changed, the differential pressure of each pressure loss measuring unit 221 changes according to the rotation speed of the rotating member 21, so that the differential pressure set as displacement 0 is also offset by the same amount. Then, after the rotation speed becomes stable, a trigger signal is given from the outside in the same no-load state as described above, and the value at that time is set to "0" again. As a result, when the rotation of the rotating member 21 is constant, it is possible to measure at different rotation speeds in the same manner as in the first embodiment.

Although specific embodiments are described above, the embodiments are merely examples and are not intended to limit the scope of the present invention. The devices and methods described in this specification can be embodied in forms other than those described above. Further, without departing from the scope of the present invention, omissions, substitutions, and modifications can be made to the above-described embodiments as appropriate. Such omissions, substitutions, and modifications are included in the claims and equivalents thereof and fall within the technical scope of the present invention.

Specifically, in the first to eighth embodiments, the CPU 103 of the control device 20 performs predetermined control based on the calculation result of the load applied to a shaft. However, the present invention is not limited to this, the load applied to a shaft may be calculated by a single electronic component having the function of the control device 20, and predetermined control may be performed based on the calculation result.

Further, any two or more of the configurations in the above-described first embodiment to the fourth embodiment may be combined, or any two or more of the configurations in the above-described fifth embodiment to the eighth embodiment may be combined. Any one or two or more of the configurations in the above-described fifth embodiment to the eighth embodiment may be combined with respect to the configuration in which any two or more of the configurations in the above-described first embodiment to the fourth embodiment are combined.

Although various embodiments are described above with reference to the drawings, it goes without saying that the present invention is not limited to such examples. The invention is defined by the appended claims.

### REFERENCE SIGNS LIST

1: spindle device of machine tool
10: bearing device
11: housing
20: control device
21: rotating member
31: front rolling bearing
31a, 31b: angular ball bearing
33: outer ring
34: inner ring
35: ball
36: front outer ring side spacer
38: front inner ring side spacer
41: rear rolling bearing
46: rear outer ring side spacer
48: rear inner ring side spacer
51: drive motor
52: stator
53: rotor
100: displacement sensor
101: load measuring unit
102: motor drive circuit
103: CPU
R: circle
S1, S2, S3: position

## Claims

1. A calculation method used for a spindle device (1) with a bearing device (10) and a control device (20), wherein the bearing device (10) includes a rotating member (21), a bearing (31, 41) which supports the rotating member (21) so that the rotating member (21) can rotate, a housing (11) which holds the bearing (31, 41), and displacement sensors (100) which are installed in the housing (11) or a non-rotating part of the bearing (31, 41) to measure a distance to a surface that rotates with the rotating member (21), and wherein the method comprises:
calculating an amount of change in a diameter of the rotating member (21) based on measurement results by the displacement sensors (100) provided at three or more positions on a plane orthogonal to a rotation axis (P) of the rotating member (21),
calculating an amount of radial displacement of the rotation axis (P) based on the measurement results by the displacement sensors (100) provided at the three or more positions,
calculating a load applied to a shaft based on the amount of radial displacement of the rotation axis (P) and the amount of change in the diameter of the rotating member (21).

2. A bearing device (10), comprising:
a rotating member (21);
a bearing (31, 41) which supports the rotating member (21) so that the rotating member (21) can rotate;
a housing (11) which holds the bearing (31, 41); and
displacement sensors (100) which are installed in the housing (11) or a non-rotating part of the bearing (31, 41) to measure a distance to a surface that rotates with the rotating member (21), wherein
the displacement sensors (100) are provided at three or more positions on a circumference of a circle defined on a plane orthogonal to a rotation axis (P) of the rotating member (21),
the bearing (31, 41) includes a front bearing (31) provided near one end of the rotating member (21) in an axial direction and a rear bearing (41) provided near the other end of the rotating member (21) in the axial direction,
the front bearing (31) includes a first front bearing (31a) and a second front bearing (31b) located further on the other end side of the rotating member (21) in the axial direction than the first front bearing (31a),
the plane orthogonal to the rotation axis (P) of the rotating member (21) is located between the first front bearing (31a) and the second front bearing (31b), and
the displacement sensors (100) are eddy current displacement sensors, capacitance displacement sensors, or laser displacement meters.

3. The bearing device according to claim 2, wherein
the surface that rotates with the rotating member (21) is an outer surface of an inner ring of the bearing (31) or an outer peripheral surface of the rotating member (21).

4. The bearing device according to claim 2, wherein
the surface that rotates with the rotating member (21) is provided in a spacer provided along with an inner ring of the bearing (31).

5. The bearing device (10) according to any one of claims 2 to 4, wherein
the non-rotating part of the bearing (31) is an outer ring of the bearing (31), and
the displacement sensors (100) are provided in the outer ring of the bearing (31).

6. The bearing device (10) according to any one of claims 2 to 5, wherein
the rotating member (21) is a spindle for a machine tool.

7. A spindle device (1) for a machine tool comprising:
a bearing device (10) according to any one of claims 2 to 6, and
a calculation unit (20) which calculates an amount of change in a diameter of the rotating member (21) based on measurement results by the displacement sensors.

## Patentansprüche

1. Berechnungsverfahren, das für eine Spindelvorrichtung (1) mit einer Lagervorrichtung (10) und einer Steuervorrichtung (20) eingesetzt wird, wobei die Lagervorrichtung (10) ein rotierendes Element (21), ein Lager (31, 41), das das rotierende Element (21) so trägt, dass das rotierende Element (21) rotieren kann, ein Gehäuse (11), das das Lager (31, 41) aufnimmt, sowie Verschiebungssensoren (100) enthält, die in dem Gehäuse (11) oder einem nicht rotierenden Teil des Lagers (31, 41) installiert sind, um einen Abstand zu einer Fläche zu messen, die sich mit dem rotierenden Element (21) dreht, und wobei das Verfahren umfasst:
Berechnen eines Betrages von Änderung eines Durchmessers des rotierenden Elementes (21) auf Basis von Messergebnissen der Verschiebungssensoren (100), die an drei oder mehr Positionen auf einer Ebene orthogonal zu einer Drehachse (P) des rotierenden Elementes (21) vorhanden sind,
Berechnen eines Betrages radialer Verschiebung der Drehachse (P) auf Basis der Messergebnisse der an den drei oder mehr Positionen vorhandenen Verschiebungssensoren (100),
Berechnen einer auf eine Welle wirkenden Last auf Basis des Betrages radialer Verschiebung der Drehachse (P) und des Betrages von Änderung des Durchmessers des rotierenden Elementes (21).

2. Lagervorrichtung (10), die umfasst:
ein rotierendes Element (21);
ein Lager (31, 41), das das rotierende Element (21) so trägt, dass das rotierende Element (21) rotieren kann;
ein Gehäuse (11), das das Lager (31, 41) aufnimmt; sowie
Verschiebungs-Sensoren (100), die in dem Gehäuse (11) oder einem nicht rotierenden Teil des Lagers (31, 41) installiert sind, um einen Abstand zu einer Fläche zu messen, die sich mit dem rotierenden Element (21) dreht, wobei
die Verschiebungssensoren (100) an drei oder mehr Positionen an einem Umfang eines Kreises vorhanden sind, der auf einer Ebene orthogonal zu einer Drehachse (P) des rotierenden Elementes (21) definiert ist,
das Lager (31, 41) ein vorderes Lager (31), das in der Nähe eines Endes des rotierenden Elementes (21) in einer axialen Richtung vorhanden ist, und ein hinteres Lager (41) einschließt, das in der Nähe des anderen Endes des rotierenden Elementes (21) in der axialen Richtung vorhanden ist,
das vordere Lager (31) ein erstes vorderes Lager (31a) und ein zweites vorderes Lager (31b) enthält, das weiter an der Seite des anderen Endes des rotierenden Elementes (21) in der axialen Richtung angeordnet ist als das erste vordere Lager (31a),
die Ebene orthogonal zu der Drehachse (P) des rotierenden Elementes (21) zwischen dem ersten vorderen Lager (31a) und dem zweiten vorderen Lager (31b) angeordnet ist, und
die Verschiebungssensoren (100) Wirbelstrom-Verschiebungssensoren, Kapazitäts-Verschiebungssensoren oder Laser-Verschiebungsmesseinrichtungen sind.

3. Lagervorrichtung nach Anspruch 2, wobei
die Fläche, die sich mit dem rotierenden Element (21) dreht, eine Außenfläche eines Innenrings des Lagers (31) oder eine Außenumfangsfläche des rotierenden Elementes (21) ist.

4. Lagervorrichtung nach Anspruch 2, wobei
die Fläche, die sich mit dem rotierenden Element (21) dreht, in einem Abstandshalter vorhanden ist, der zusammen mit einem Innenring des Lagers (31) vorhanden ist.

5. Lager Vorrichtung (10) nach einem der Ansprüche 2 bis 4, wobei
der nicht rotierende Teil des Lagers (31) ein Außenring des Lagers (31) ist, und
die Verschiebungssensoren (100) in dem Außenring des Lagers (31) vorhanden sind.

6. Lagervorrichtung (10) nach einem der Ansprüche 2 bis 5, wobei
das rotierende Element (21) eine Spindel für eine Werkzeugmaschine ist.

7. Spindelvorrichtung (1) für eine Werkzeugmaschine, die umfasst:
eine Lagervorrichtung (10) nach einem der Ansprüche 2 bis 6, wobei
eine Berechnungs-Einheit (20), die einen Betrag von Änderung eines Durchmessers des rotierenden Elementes (21) auf Basis von Messergebnissen der Verschiebungssensoren berechnet.

## Revendications

1. Procédé de calcul utilisé pour un dispositif à broche (1) comportant un dispositif de palier (10) et un dispositif de commande (20), le dispositif de palier (10) incluant un élément tournant (21), un palier (31, 41) qui supporte l'élément tournant (21) de sorte à ce que l'élément tournant (21) puisse tourner, une enveloppe (11) qui maintient le palier (31, 41) et des capteurs de déplacement (100) qui sont installés dans l'enveloppe (11) ou sur un élément non tournant du palier (31, 41) afin de mesurer la distance à une surface qui tourne avec l'élément tournant (21), et où le procédé comprend :
le calcul de la valeur de changement du diamètre de l'élément tournant (21) sur la base de résultats de mouvement par les capteurs de déplacement (100) disposés à trois positions ou plus sur un plan orthogonal à l'axe de rotation (P) de l'élément tournant (21),
le calcul de la valeur de déplacement radial de l'axe de rotation (P) sur la base de résultats de mouvement par les capteurs de déplacement (100) aux trois positions ou plus,
le calcul de la charge appliquée à un arbre sur la base de la valeur de déplacement radial de l'axe de rotation (P) et de la valeur de changement du diamètre de l'élément tournant (21).

2. Dispositif de palier (10) comprenant :
un élément tournant (21),
un palier (31, 41) qui supporte l'élément tournant (21) de sorte à ce que l'élément tournant (21) puisse tourner,
une enveloppe (11) qui maintient le palier (31, 41), et des capteurs de déplacement (100) qui sont installés dans l'enveloppe (11) ou sur un élément non tournant du palier (31, 41) afin de mesurer la distance à une surface qui tourne avec l'élément tournant (21), dans lequel :
les capteurs de déplacement (100) sont disposés à trois positions ou plus sur la circonférence d'un cercle défini sur un plan orthogonal à l'axe de rotation (P) de l'élément tournant (21),
le palier (31, 41) inclut un palier avant (31) disposé à proximité d'une première extrémité de l'élément tournant (21) dans la direction axiale et un palier arrière (41) disposé à proximité de l'autre extrémité de l'élément tournant (21) dans la direction axiale,
le palier avant (31) inclut un premier palier avant (31a) et un second palier avant (31b) placé pour être plus éloigné sur le côté de l'autre extrémité de l'élément tournant (21) dans la direction axiale que le premier palier avant (31a),
le plan orthogonal à l'axe de rotation (P) de l'élément tournant (21) est situé entre le premier palier avant (31a) et le second palier avant (31b), et
les capteurs de déplacement (100) sont des capteurs de déplacement à courants de Foucault, des capteurs de déplacement capacitifs ou des compteurs de déplacement à laser.

3. Dispositif de palier selon la revendication 2, dans lequel :
la surface qui tourne avec l'élément tournant (21) est la surface externe d'une bague interne du palier (31) ou la surface périphérique externe de l'élément tournant (21).

4. Dispositif de palier selon la revendication 2, dans lequel :
la surface qui tourne avec l'élément tournant (21) est disposée dans une entretoise placée avec une bague interne du palier (31).

5. Dispositif de palier selon l'une quelconque des revendications 2 à 4, dans lequel :
l'élément non tournant du palier (31) est la bague externe du palier (31), et
les capteurs de déplacement (100) sont disposés dans la bague externe du palier (31).

6. Dispositif de palier selon l'une quelconque des revendications 2 à 5, dans lequel :
l'élément tournant (21) est une broche destinée à une machine-outil.

7. Dispositif à broche (1) pour une machine-outil comprenant :
un dispositif de palier (10) conforme à l'une quelconque des revendications 2 à 6, et
une unité de calcul (20) qui calcule la valeur de changement du diamètre de l'élément tournant (21) sur la base de résultats de mesure effectuée par les capteurs de déplacement.
